## Europäisches Patentamt
## European Patent Office
## Office européen des brevets

(19)

(11) Numéro de publication: **0 233 090**
**B1**

(12) ## FASCICULE DE BREVET EUROPEEN

(45) Date de publication du fascicule du brevet:
24.10.90

(51) Int. Cl.⁵: **B65F 1/12**

(21) Numéro de dépôt: 87400005.2

(22) Date de dépôt: 05.01.87

(54) **Conteneur à verre.**

(30) Priorité: 08.01.86 FR 8600171

(43) Date de publication de la demande:
19.08.87 Bulletin 87/34

(45) Mention de la délivrance du brevet:
24.10.90 Bulletin 90/43

(84) Etats contractants désignés:
BE CH DE ES GB IT LI NL

(56) Documents cités:
DE-A- 2 715 992
DE-A- 2 935 969
FR-A- 2 539 112
FR-A- 2 555 145
GB-A- 1 406 214
US-A- 3 719 296
US-A- 3 761 135

(73) Titulaire: ALLIBERT S.A. Société anonyme dite:,
129, avenue Léon Blum, F-38042 Grenoble Cédex(FR)

(72) Inventeur: Faucillon, Michel, 6, rue Jean Giono,
F-95560 Baillet en France(FR)
Inventeur: Moret, Michel, 68, rue de Saint Leu,
F-95600 Eaubonne(FR)

(74) Mandataire: Lerner, François, 5, rue Jules Lefèbvre,
F-75009 Paris(FR)

ACTORUM AG

## Description

L'invention a pour objet un conteneur à verre. Ce conteneur à verre comprend une cuve de réception surmontée extérieurement d'un anneau de levage et présentant un fond équipé d'une trappe de vidange, laquelle est munie d'un mécanisme de verrouillage et de déverrouillage, ce mécanisme comprenant un pêne formant came disposé à l'intérieur de la cuve et qui est articulé autour d'un pivot porté par ladite cuve, le pêne étant muni d'un crochet qui coopère, en position de verrouillage de la trappe, avec un anneau d'accrochage relié à cette même trappe; une tige rigide, liée au pêne et qui est mobile en translation en formant levier de commande du pêne; et un moyen d'actionnement extérieur de cette tige.

Un tel conteneur est décrit dans la demande FR-A 2 539 112.

Mais un problème important qui reste posé est celui du coïncement des débris de verre entre les différentes pièces du mécanisme de verrouillage/déverrouillage.

Selon l'invention, ce problème est résolu en particulier:

– en déportant vers le fond de la cuve l'essentiel, sinon la totalité, du mécanisme précité, ce qui réduit le nombre de pièces en jeu,

– et en assurant une reprise des efforts supportés par le conteneur, ce qui décharge d'autant les moyens de verrouillage.

Plus précisément l'invention se caractérise en ce que:

– le pêne est disposé vers le fond de la cuve où il coopère avec l'anneau d'accrochage de la trappe qui est directement fixé sur cette dernière,

– et en ce que la cuve est équipée intérieurement d'une armature métallique de reprise d'efforts s'étendant entre une ceinture de renforcement qui borde le fond de la cuve et l'anneau de levage, cette armature étant reliée a des protection du mécanisme de verrouillage et de déverrouillage de la trappe.

Dans un mode de réalisation de l'invention présenté en revendication 2 le moyen d'actionnement de la tige peut comprendre un levier articulé autour d'un support formant pivot porté par le conteneur.

Mais dans une variante de réalisation, il a également été prévu, conformément à la revendication 5, que le conteneur puisse être équipé d'une pédale de commande de la trappe permettant un actionnement automatique "direct" du mécanisme de verrouillage/déverrouillage, par le fond de la cuve.

D'autres avantages de l'invention apparaîtront de la description qui va suivre faite en référence aux dessins annexés présentés à titre d'exemple et dans lesquels:

– la figure 1 illustre une vue schématique de face et en coupe du conteneur à verre de l'invention;

– la figure 2 montre une vue selon la flèche II du conteneur présenté à la figure 1,

– la figure 3 montre le fonctionnement du mécanisme de verrouillage et de déverrouillage du conteneur,

– la figure 4 présente une vue schématique de face et en coupe d'une variante de réalisation du conteneur,

– la figure 5 montre une vue en coupe selon la flèche V du conteneur présenté à la figure 4,

– la figure 6 présente un détail de conteneur présenté figure 4, dans le cas où la pédale est armée et la trappe fermée et verrouillée,

– la figure 7 montre le même détail que celui de la figure 6 dans le cas où la pédale est armée et la trappe déverrouillée,

– la figure 8 présente encore le même détail dans le cas où la pédale est désarmée et la trappe ouverte,

– la figure 9 est une vue de détail, en coupe, montrant un profilé de protection de la tige,

– la figure 10 est une vue dudit profilé dans la direction de la flèche X,

– la figure 11 illustre une vue intérieure de face et en coupe longitudinale, d'une autre variante de réalisation du conteneur,

– la figure 12 illustre en coupe, selon la ligne XII–XII de la figure 11, une vue partielle du conteneur représenté sur cette figure 11,

– la figure 13 correspond à une vue du détail repéré XIII à la figure 12.

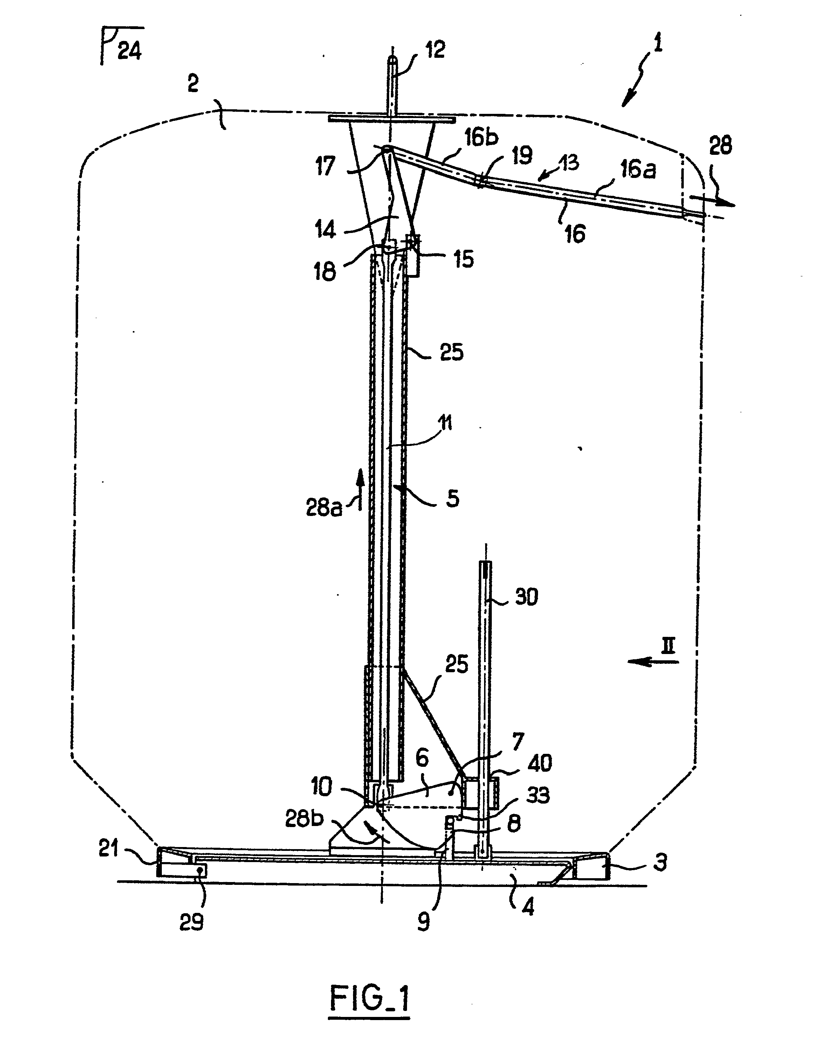

On fera, tout d'abord, référence à la figure 1, dans laquelle un conteneur à verre repéré dans son ensemble 1, comprend une cuve de réception 2 dont l'enceinte extérieure a été matérialisée en trait mixte. Le conteneur comporte un fond 3, au niveau duquel est ménagée une trappe 4 de vidange, et est muni d'un mécanisme de verrouillage et de déverrouillage, repéré 5, de la trappe 4.

Le mécanisme de verrouillage et de déverrouillage comprend vers le fond de la cuve un pêne 6 formant came articulé autour d'un pivot 7 porté par le conteneur 1. Le pivot 7 occupe avantageusement une position fixe sur le conteneur.

Le pêne 6 est muni d'un crochet 8 qui coopère, en position de verrouillage de ladite trappe, avec un moyen d'accrochage, tel qu'un anneau 9. L'anneau peut être notamment métallique et est fixé sur la trappe 4, par exemple par soudage.

Le pêne 6 est, par ailleurs, monté pivotant autour d'un support d'articulation 10. Le support 10 lie le pêne 6 à une tige rigide 11. La tige 11 qui s'étend sur la plus grande partie de la hauteur de la cuve forme levier de commande du pêne 6 et est, à cet effet, mobile en translation dans une direction sensiblement confondue avec l'axe principal 12 du conteneur.

La tige 11 est liée vers la partie supérieure du conteneur, à un moyen d'actionnement repéré dans son ensemble 13.

Le moyen d'actionnement 13 comprend un levier coudé 14 et une barre de manoeuvre 16. Le levier 14 est articulé autour d'un support formant pivot 15 porté par le conteneur, et comporte, vers chacune de ses extrémités une articulation 17, 18. La barre de manoeuvre 16 vient s'articuler sur le pivot d'articulation 17, tandis que sur le pivot 18 vient s'articuler la tige 11. Le support formant pivot 15 peut être solidaire rigidement du conteneur et occuper une position fixe. En d'autres termes, il constitue le point fixe autour duquel s'articule le levier 14.

De façon préférentielle, la barre de manoeuvre 16 comprend au moins deux parties telles que 16a, 16b. Ces deux parties 16a, 16b sont articulées entre elles autour de l'axe d'un pivot 19.

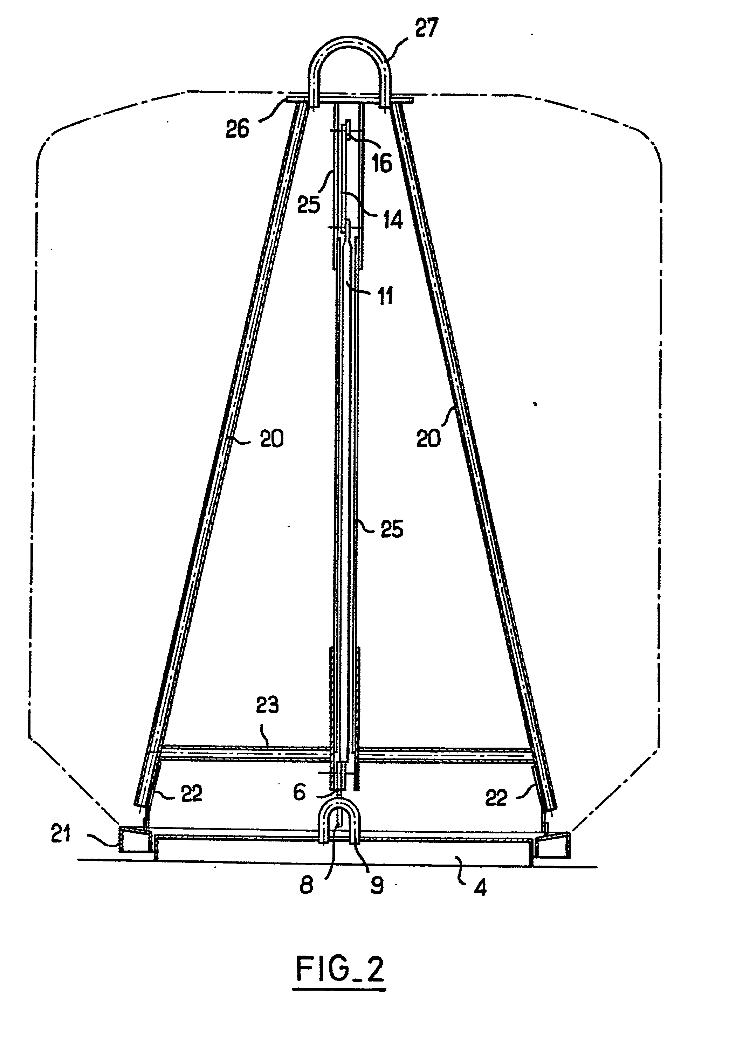

Si l'on se réfère maintenant à la figure 2, on voit la structure métallique du conteneur.

Cette structure est constituée en particulier de deux montants métalliques 20, montés par exemple selon des directions concourantes, et reliés vers leur base à une ceinture métallique 21 bordant l'ouverture de fond de la cuve. La ceinture 21 constitue, avec la trappe 4, le fond 3 du conteneur.

Des pattes 22 peuvent, notamment, rendre solidaire la ceinture 21 et les montants 20. On peut aussi prévoir une entretoise 23 de rigidification qui peut être notamment soudée entre les deux montants, vers leur base.

En outre, l'ensemble du mécanisme de verrouillage et de déverrouillage 5 peut être logé dans une gaine 25, relativement résistante, et de forme choisie pour qu'elle protège ledit mécanisme de façon à éviter qu'un choc ou un déchet de verre, tel qu'une bouteille, ne vienne endommager l'une de ses pièces constitutives.

Vers le sommet du conteneur, les deux montants sont reliés rigidement, par exemple par soudage, à une plaque métallique 26. Un anneau d'accrochage tel que 27, peut être, par exemple, monté rigidement, par exemple par soudage, sur la plaque 26, de façon à faciliter la manutention du conteneur.

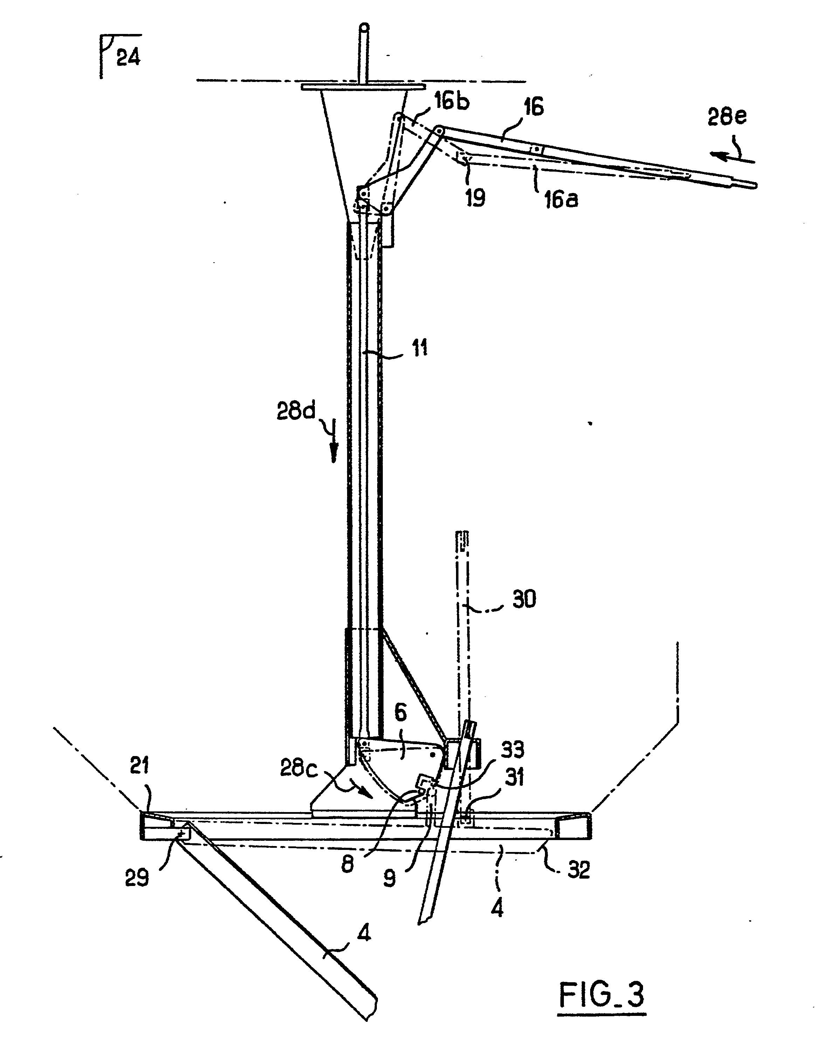

En se reportant maintenant plus particulièrement aux figures 1 et 3, on va expliquer le fonctionnement du mécanisme de verrouillage et de déverrouillage 5 dont est pourvu le conteneur de l'invention, dans son premier mode de réalisation.

On notera, tout d'abord, que les différentes pièces constitutives de ce mécanisme s'articulent sensiblement dans le même plan de manoeuvre repéré 24.

On considèrera, comme il apparaît clairement de la figure 1, tout d'abord, que la trappe 4 est fermée et verrouillée. Le crochet 8 du pène 6 coopère avec l'anneau 9. La barre de manoeuvre 16 occupe alors une position rétractée vers l'intérieur de la cuve 2 du conteneur (figure 1).

Pour procéder au déverrouillage de la trappe 4 et permettre ainsi son ouverture, on tire sur la barre de manoeuvre 16 dans le sens de la flèche 28 de la figure 1, la barre s'étendant alors vers l'extérieur du conteneur. Ce mouvement de translation de la barre 16 entraîne le pivotement du levier 14 autour de son point fixe 15. L'articulation du levier 14 provoque le déplacement en translation de la tige 11, qui s'articule en 18 sur le levier. La tige 11 commande lors le pène 6 qui pivote autour de son point fixe 7 en s'articulant en 10. Le crochet 8 du pène s'écarte alors de l'anneau 9, ce qui libère la trappe 4. On a représenté figure 1, par deux flèches 28a et 28b, respectivement, le déplacement de la tige 11 et la rotation de dégagement du pène 6.

La trappe 4 ainsi déverrouillée, peut pivoter autour de son axe 29 porté par la ceinture 21.

On a représenté le conteneur, trappe ouverture, en trait plein à la figure 3.

Comme il apparaît plus particulièrement de cette même figure, la trappe est munie d'une barre 30 formant limiteur de course. La barre 30 s'articule en 31 sur un axe porté par la trappe 4 et assure, en outre le guidage de la trappe en coulissant dans un passage 49 prévu sur le conteneur.

La barre 30 fixe l'ouverture maximum de la trappe 4 qui peut, notamment, venir porter sur un support, tel que le sol, par un sabot renforcé 32 de forme appropriée.

Pour refermer la trappe 4, il suffit, tel qu'il apparaît clairement de la figure 3, de faire pivoter celle-ci dans le sens opposé, l'anneau 8 venant alors porter contre une butée d'engagement 33 dont le pène 6 est pourvu.

On a représenté cette position en traits pointillés, figure 3.

Cet appui de l'anneau sur la butée 33, entraîne un pivotement "retour" du pène 6 autour de son axe fixe 7, provoque alors la coopération du crochet 8 et de l'anneau 9, et commande une translation (inverse de la précédente) de la tige 11. La tige 11 agit, en 18, alors sur le levier 14 qui pivote en 15. Cette articulation du levier provoque le retrait de la barre de manoeuvre 16 qui s'articule en 17. La barre 16 se loge donc à nouveau dans le conteneur 1. On a représenté figure 3 par les flèches 28c, 28d et 28e, respectivement, la pivotement retour, ou d'engagement, du pène, le déplacement de la tige 11 et le retour, ou retrait, de la barre 16.

La trappe est alors à nouveau fermée et verrouillée.

L'axe 19 qui lie les deux parties 16a et 16b de la barre permet, notamment, de repousser ladite barre dans la cuve lorsque la trappe est ouverte.

En outre, on notera que de cette façon la barre n'est plus tout à fait rectiligne. En conséquence, lors d'un éventuel retour de levier en cas de fermeture trop brutale de la trappe, la barre 16 a tendance à se plier, en s'articulant autour de cet axe 19, au lieu de faire saillie brusquement vers l'extérieur du conteneur et risquer de blesser un utilisateur ou un éventuel passant.

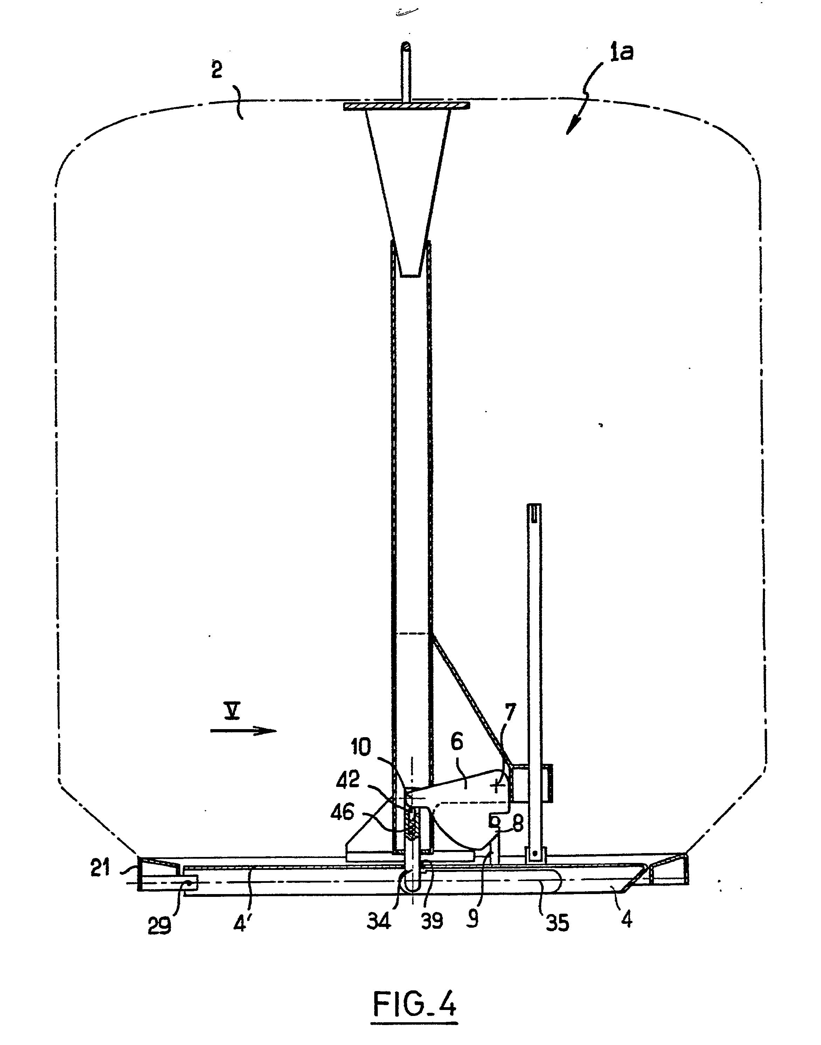

On va maintenant se reporter aux figures 4 à 8 et plus particulièrement à la figure 4, sur laquelle est représentée une variante préférée de réalisation du conteneur selon l'invention.

On retrouve, dans cette figure 4, qui ont été repérées de la même façon, un certain nombre de pièces semblables ou identiques à celles du mode de réalisation précédent. Ces pièces ou éléments ne seront pas à nouveau décrits. On décrira uniquement, ci-après, les différences du conteneur repéré 1a dans son ensemble.

Tout d'abord, la tige de commande du pène 6, repérée 34, s'étend vers le fond 3 du conteneur à travers, notamment un passage 39 ménagé dans la trappe 4, et peut venir porter contre une pédale 35 articulée disposée sous la paroi de dessus 4' de la trappe 4.

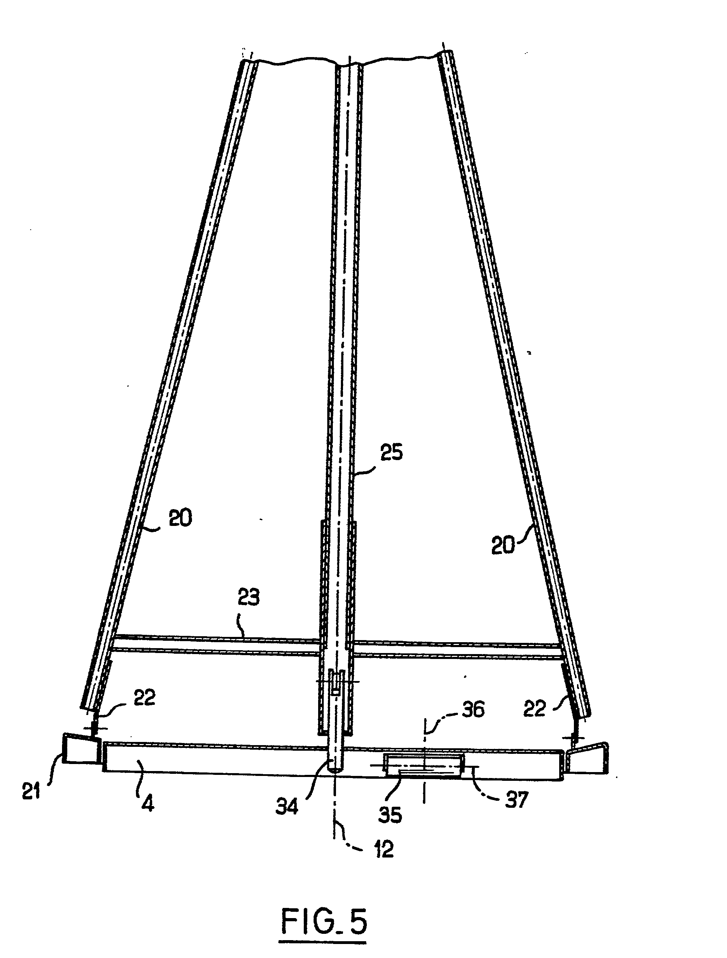

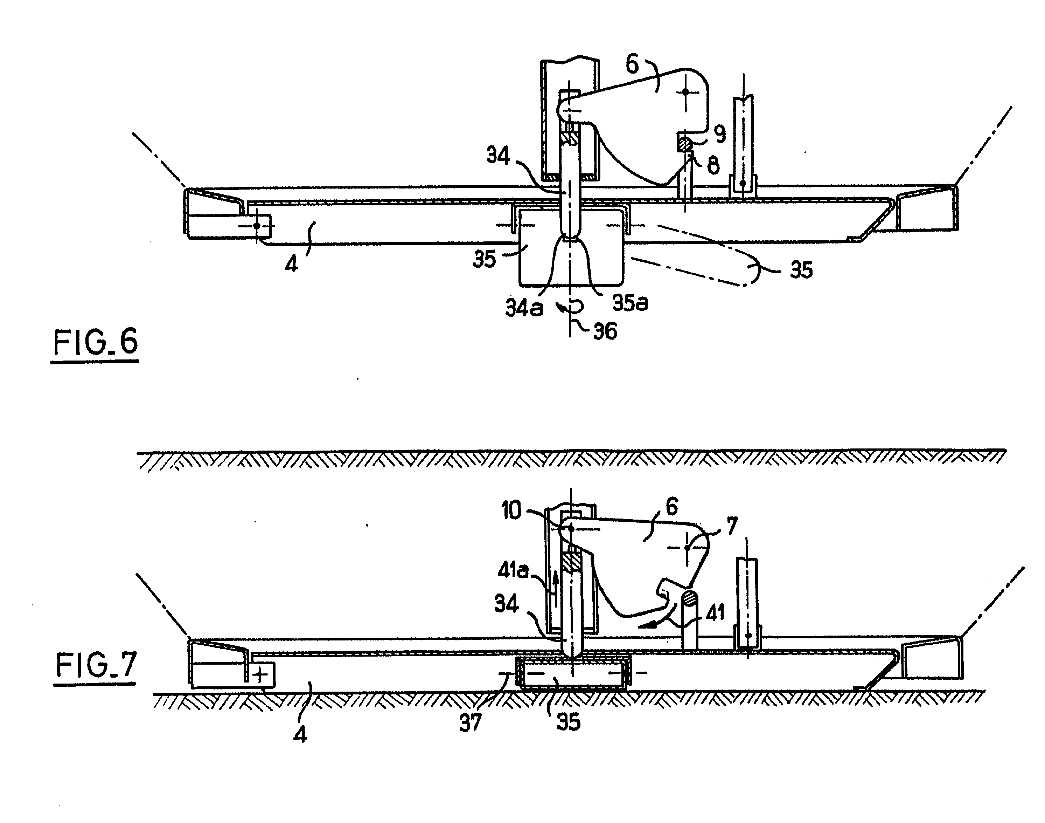

De façon plus précise, la pédale 35 est portée par un porte-pédale 50 relié à la trappe 4. Le porte-pédale 50 et la pédale 35 peuvent pivoter autour d'un premier pivot 36 qui s'étend sensiblement parallèlement à la tige- poussoir 34 dans la position verrouillée de la trappe. L'articulation autour de ce premier pivot 36 s'effectue entre :
- une position armée, représentée en trait plein aux figures 6 et 7, dans laquelle position la tige 34 vient sensiblement reposer par son extrémité inférieure 34a contre la pédale 35, en 35a, et,
- une position désarmée écartée angulairement d'environ 90° de la précédente et représentée en trait plein aux figures 4 et 5, la tige 34 étant dans cette position dégagée dudit appui.

Comme il apparaît clairement de la figure 5, l'axe du pivot 36 est situé à l'écart de l'axe principal 12 du conteneur, ces deux axes étant cependant avantageusement parallèles.

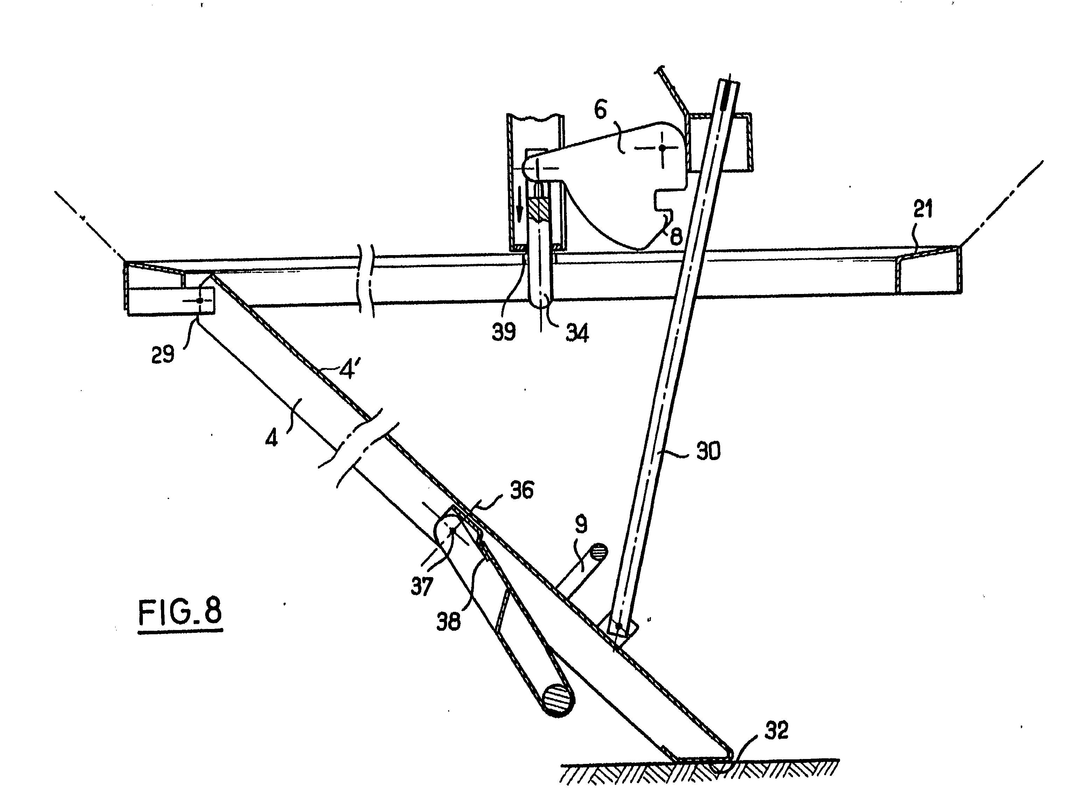

De façon à constituer organe de commande du mécanisme de verrouillage/déverrouillage la pédale comporte, en outre, un second pivot d'articulation 37 porté par le porte-pédale (figures 5 et 8), s'étendant sensiblement perpendiculaire au premier pivot 36 et permettant à la pédale d'occuper une position plus ou moins inclinée par rapport à la trappe 4.

De cette façon, lorsque la pédale 35 vient en appui sur le sol, ou un support quelconque, elle forme alors, dans sa position armée, moyen d'actionnement de la tige 34. On peut noter que la tige est toujours mobile en translation selon l'axe 12 du conteneur et commande le pivotement du pène 6 au moyen du pivot d'articulation 10.

On notera que le pène 6 peut ne plus comporter de butée d'engagement 33.

On va maintenant décrire le fonctionnement du mécanisme de verrouillage et de déverrouillage de la trappe 4, dans cette variante de réalisation.

On se reportera, à cet effet, tout d'abord aux figures 4 et 5.

La trappe 4, articulée en 29 est fermée et verrouillée. L'anneau 9 coopère avec le crochet 8 du pène. La pédale est en position désarmée et la tige 34 n'est soumise à aucune force et ne repose sur aucun appui.

Pour ouvrir la trappe, de façon par exemple à vidanger la cuve 2, il suffit de soulever légèrement le conteneur grâce à l'anneau supérieur 27 de manutention. On peut alors faire pivoter, par exemple d'un angle sensiblement égal à 90° (les deux positions extrêmes armée/désarmée étant limitées par exemple par des butées, non représentées), la pédale 35 autour de son pivot 36 et venir la placer dans sa position armée. La tige 34 vient alors en appui en 35a sur la pédale 35 qui occupe alors une position inclinée. En effet, la pédale a pivoté autour de son second axe 37, du fait de son propre poids (figure 6).

Avantageusement, de façon à limiter la "chute" de la pédale 35, on peut prévoir une plaque 38 portée par le porte-pédale 50 et formant limiteur d'angle d'inclinaison de la pédale.

On peut alors reposer le conteneur sur le sol, ou un support quelconque, ce qui provoque corrélativement l'appui de la pédale et son pivotement autour de l'axe 37 (figure 7).

On notera que la pédale peut, dans l'exemple présenté, s'escamoter vers l'intérieur de la trappe 4 dans un logement de réception prévu à cet effet. On remarquera que ce logement est avantageusement prévu pour que la pédale puisse occuper sa position escamotée dans ses états armé et désarmé.

Le pivotement de la pédale 35 "armée" autour de son axe 37 provoque le déplacement en translation de la tige 34, tel qu'illustré figures 6 et 7. La tige est repoussée vers l'intérieur du conteneur, entraînant le pivotement du pène 6, articulé en 10, autour de son pivot fixe 7. Le crochet 8 se désengage alors de l'anneau 9.

On a représenté figure 7 par les flèches 41 et 41a, respectivement le pivotement de dégagement du pène 6 et le déplacement en translation de la tige 34.

Il suffit alors de soulever à nouveau le conteneur 1a, ce qui provoque l'ouverture de la trappe qui pivote en 29 et vient reposer, par une extrémité 32 formant sabot, sur le sol. L'ouverture de la trappe provoque le pivotement automatique de la pédale 35 qui revient en position désarmée, en pivotant autour de 36, tel que représenté figure 8. On notera que la barre 30 guide toujours la trappe 4 et limite son ouverture.

Comme il apparaît clairement de cette même figure, la tige 34 est alors libre de mouvement et redescend légèrement dans le sens de la flèche vers le fond du conteneur, entraînant le pène 6 qui revient sensiblement dans la position qu'il occupe lorsqu'il est verrouillé.

La tige 34 ne s'étend cependant pas hors du fond 3 et reste protégée à l'intérieur du conteneur.

Pour refermer la trappe, on comprendra qu'il suffit de reposer le conteneur au sol, ou sur un appui quelconque, (la pédale étant toujours en position désarmée).

L'anneau 9 vient alors en butée contre le pène 6 et s'enclenche sur le crochet 8.

La trappe 4 est fermée et à nouveau verrouillée. La pédale 35 est, bien entendu, en position désarmée. (figure 4).

On notera qu'afin de limiter les effets, sur le mécanisme de verrouillage/déverrouillage, d'une manipulation brutale du conteneur lors de l'ouverture ou de la fermeture de la trappe, on peut prévoir, sur la tige 34, une tige-poussoir 42 élastique. Plus particulièrement, la tige-poussoir 42 sera avantageusement disposée dans un logement prévu vers l'intérieur de la tige et sera maintenue en contact du pène 6, vers le pivot d'articulation 10, sur l'action d'un ressort 46. Dans ces conditions, la tige-poussoir et le ressort constitueront un absorbeur d'énergie.

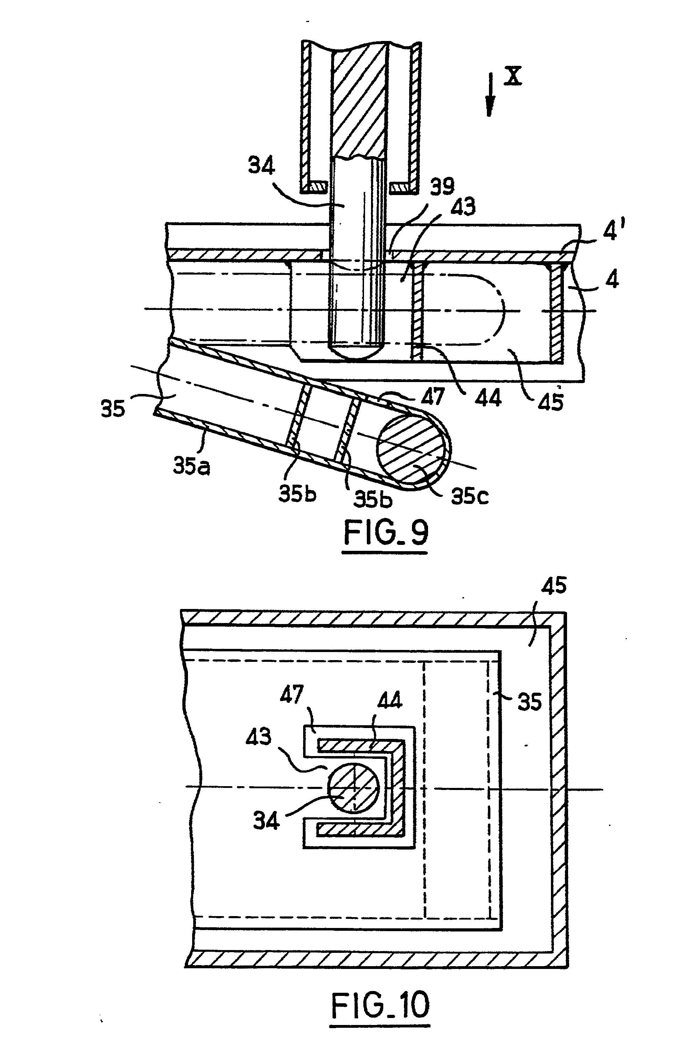

Si l'on se reporte maintenant aux figures 9 et 10, on voit plus en détail le logement de la partie extrême inférieure de la tige 34 dans la trappe 4, ainsi que la structure de la pédale 35.

Vers l'intérieur de la trappe 4 se trouve ménagée une chambre 43 limitée par des parois sensiblement verticales 44 formées en U, par exemple, et qui s'étendent de la paroi de dessus 4' de la trappe 4. La chambre 43 assure la protection de la partie extrême inférieure de la tige 34 qui s'étend dans la trappe et s'y déplace en fonction de la position de la pédale 35.

A cet effet, la hauteur des parois 44 est légèrement supérieure à la distance de déplacement potentiel de la tige 34 dans la trappe, tout en restant inférieure à la hauteur de la trappe elle-même.

En outre, la pédale, est constituée comme il apparaît clairement de la figure 9, d'un caisson 35a renforcé (par exemple par deux entretoises 35b et un cylindre de rigidification 35c d'extrémité), qui peut se loger dans la trappe 4 sous la paroi de dessus 4', conformément à ce qui a été dit précédemment. A cet effet, on peut prévoir une seconde chambre 45, entourant la première 43, de réception de la pédale.

Pour permettre à la pédale 35 d'agir, en position armée tel que représenté en traits mixtes figure 9, sur la tige 34, on prévoit sur le caisson 35a de la pédale, une échancrure 47 formée en U, dans laquelle peuvent pénétrer les parois de protection 44 de la tige 34.

On notera qu'afin d'augmenter la rigidité de la pédale on peut limiter la protection de la tige à deux parois 44 sensiblement parallèles qui coopèrent alors avec deux fentes, en regard, formées dans le caisson 35a de la pédale (non représentées)

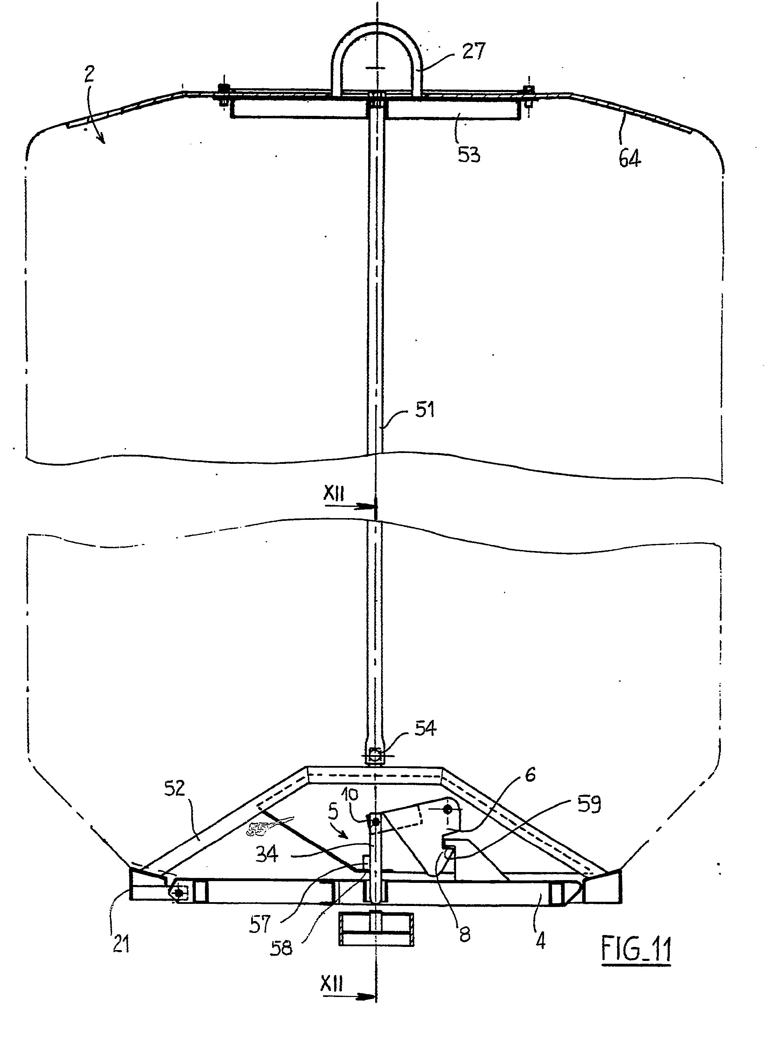

Si l'on se reporte maintenant à la figure 11, on voit illustrée une autre variante de réalisation du conteneur selon l'invention, du type à courte tige de commande 34.

Dans cette variante, la structure métallique interne du conteneur comprend un tirant 51 s'étendant sensiblement verticalement, en position d'utilisation de la cuve et sur la plus grande partie de la hauteur de celle-ci, entre un arceau 52 auquel il est relié en 54 et une platine 53 sur laquelle vient se fixer l'anneau 27 de levage, extérieur à la cuve 2.

L'arceau 52 est par ailleurs fixé rigidement à la ceinture métallique 21 qui borde l'ouverture de fond de la cuve 2.

La structure métallique que l'on vient de décrire forme ossature de traction, les efforts supportés essentiellement par la partie inférieure du conteneur, notamment lorsque celui-ci est chargé des déchets de verre, et qui surviennent lors son levage, étant repris essentiellement par la ceinture 21 et transmis à l'anneau 27 par l'intermédiaire de l'arceau 52, du tirant 51 et de la platine 53.

De façon à répartir les efforts de traction subis par le sommet de la cuve on pourrait prévoir une large platine intérieure 53 et/ou une plaque de renforcement 64 occupant une partie importante du sommet de cuve, également à l'intérieur de celle-ci.

On notera que la structure métallique illustrée essentiellement à la figure 2 et décrite précédemment, permettait également d'assurer cette fonction de reprise d'effort.

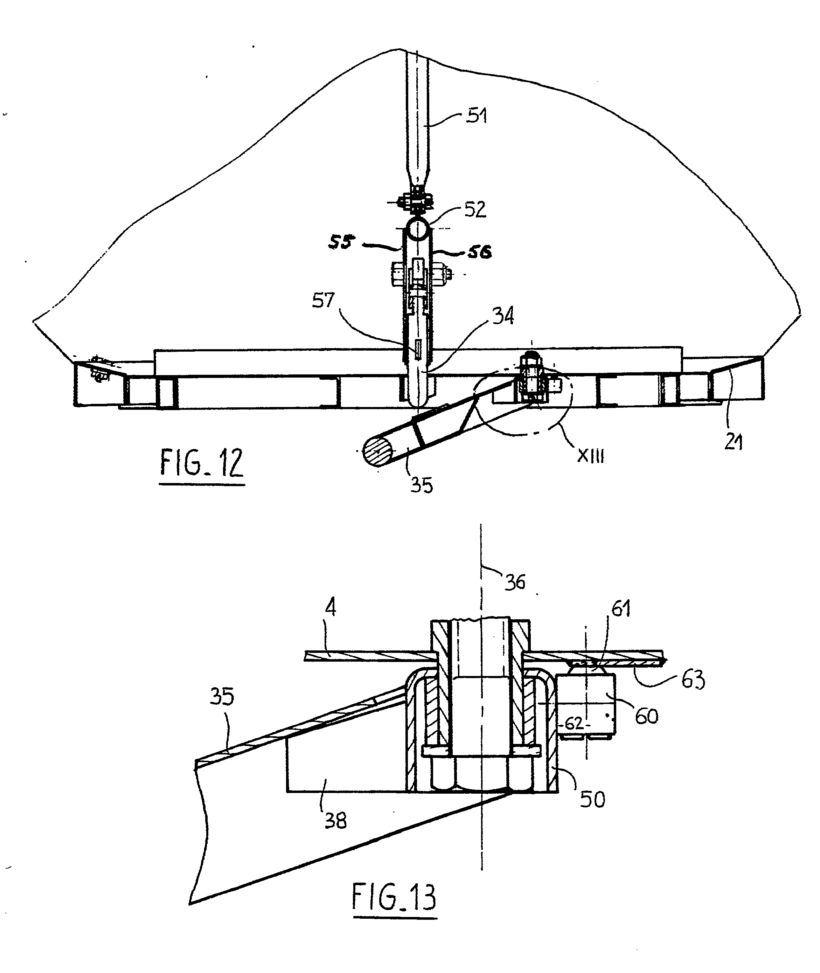

De façon à assurer une protection du mécanisme de verrouillage/déverrouillage, et notamment du pène 6 et de son moyen coopérant d'accrochage de la trappe 4, on peut prévoir, tel qu'illustré aux figures 11 et 12, d'une part que l'arceau 52 s'étende, en position d'utilisation du conteneur, juste au-dessus du mécanisme 5 en formant sa protection supérieure, et d'autre part, deux joues 55, 56 tombant dudit arceau de part et d'autre du mécanisme en formant sa protection latérale.

On notera que, dans l'exemple illustré, la tige-poussoir 34 est également protégée au niveau de sa liaison, en 10, avec le pène.

Toujours sur la figure 11, en 57, est représentée une butée formée en saillie le long de la tige 34. La butée 57 est destinée à venir coopérer avec une partie fixe 58 portée par le conteneur.

A titre d'exemple, cette partie fixe 58 peut être constituée par une plaque s'étendant entre les joues 55, 56, en regard de la butée 57.

Les positions relatives de la butée 57 et de la pièce 58 sont prévues de façon à limiter la course de la tige-poussoir 34 en améliorant la position relative du crochet 8 du pène et de son moyen coopérant d'accrochage.

On notera d'ailleurs que, afin d'accroître la sécurité d'accrochage, on peut également prévoir que le crochet 8 et le moyen d'accrochage 9 de la trappe coopèrent au niveau d'une surface d'appui 59, ce moyen 9 n'étant plus alors constitué par un anneau à section circulaire (voir notamment figures 6 à 8), mais par une surface sensiblement plane de verrouillage ou d'accrochage sur laquelle vient porter un plat prévu en regard sur le crochet 8.

A la figure 12, et de façon plus détaillée à la figure 13, on voit que sur le porte-pédale 50 est prévu un verrou 60 à tension de verrouillage réglable. De façon à assurer ce verrouillage réglable, le verrou 60 comprend avantageusement une bille ou équivalent 61, susceptible de s'escamoter dans le corps 62, à l'encontre d'un ressort (non représenté) dont on a ajusté la raideur.

En position armée (voir figure 12), mais également en position désarmée (non représentée) de la pédale 35, le verrou 60 vient porter, au niveau de sa bille 61, contre un renflement 63 formé en regard sous la paroi 4' de la trappe, en des endroits convenables, bloquant ainsi en deux positions la pédale et son porte-pédale.

On notera que dans l'exemple envisagé en relation avec la figure 13, le verrou 60 coopère pour bloquer la position de la pédale 35 avec une butée de fin de course (non représentée) limitant à 90° l'angle de rotation de cette pédale autour du pivot 36.

A titre de variante de réalisation, on aurait également pu prévoir de laisser libre en rotation la pédale et de former, au niveau de chaque position définie armée/désarmée de la pédale, un renflement "à double bosses" entre lesquelles serait venue se loger la bille 61 du verrou 60.

Toutefois, on notera qu'avantageusement quel que soit le mode de réalisation retenu, la tension de verrouillage de la bille 61 sera réglée de façon que la pédale 35 et son porte-pédale puisse pivoter par gravité, lors de l'ouverture de la trappe 4, de la position armée (figures 6, 12) à la position désarmée (figure 8), l'ensemble porte-pédale/pédale pouvant de lui-même, par son propre poids, entraîner le désengagement de la bille 61, à l'écart du renflement 63 de maintien en position.

## Revendications

1. Conteneur à verre comprenant une cuve de réception (2) surmontée extérieurement d'un anneau de levage (27) et présentant un fond équipé d'une trappe (4) de vidange laquelle est munie d'un mécanisme de verrouillage et de déverrouillage (5) ce mécanisme comprenant:

- un pêne (6) formant came disposé à l'intérieur de la cuve et qui est articulé autour d'un pivot (7) porté par ladite cuve, le pêne étant muni d'un crochet (8) qui coopère, en position de verrouillage de la trappe avec un anneau d'accrochage (9) relié à cette même trappe,
- une tige (11; 34) rigide, liée au pêne (6), ladite tige étant mobile en translation et formant levier de commande du pêne et,
- un moyen (14, 16; 35) d'actionnement extérieur de la tige, caractérisé:
- en ce que le pêne (6) est disposé vers le fond de la cuve où il coopère avec l'anneau (9) d'accrochage de la trappe qui est directement fixé sur cette dernière,
- et en ce que la cuve (2) est équipée intérieurement d'une armature métallique (20, 23; 51, 52) de reprise d'efforts s'étendant entre une ceinture (21) de renforcement qui borde le fond de la cuve et l'anneau de levage (27), cette armature étant reliée des moyens de orotection (25:55,56)
- de verrouillage et de deverrouillage de la trappe (4).

2. Conteneur selon la revendication 1, caractérisé en ce que le moyen d'actionnement (14, 16) de la tige comprend un levier (14) coudé articulé autour d'un support formant pivot (15) porté par le conteneur, ledit levier (14) présentant à chacune de ses extrémités une articulation (17, 18) où viennent s'articuler respectivement, la tige (11) qui s'étend sur la plus grande partie interne de la hauteur de la cuve, et une barre de manoeuvre (16)

comprenant deux parties (16a, 16b) elles-mêmes articulées l'une par rapport à l'autre.

3. Conteneur selon la revendication 2, caractérisé en ce que la barre (16) est susceptible, dans la position de verrouillage de la trappe (4) d'occuper une position rétractée vers l'intérieur de la cuve, et, dans la position de déverrouillage de cette même trappe, d'occuper une position saillante vers l'extérieur de cette même cuve.

4. Conteneur selon l'une quelconque des revendications précédentes, caractérisé en ce que le pêne (6) est muni d'une butée d'engagement (33) contre laquelle vient porter l'anneau d'accrochage (9) lors de la fermeture de la trappe (4) pour commander le mécanisme de verrouillage (5) et placer le pêne (6) en position verrouillée.

5. Conteneur selon la revendication 1, caractérisé en ce que la tige (34) débouche dans le fond de la cuve à travers la trappe (4) pour pouvoir coopérer avec une pédale (35) solidaire de ladite trappe, cette pédale étant susceptible de s'articuler autour de deux pivots (36, 37) portés par un porte-pédale lui-même lié à la trappe,

. ledit premier pivot (36) s'étendant sensiblement parallèlement à ladite tige (34) en position verrouillée de la trappe et la pédale s'articulant entre:
- une position armée, dans laquelle position la tige (34) vient sensiblement porter par une extrémité inférieure (34a) sur la pédale (35), et
- une position désarmée, dans laquelle position la tige (34) est dégagée de cet appui,
. ledit second pivot (37) qui est d'axe sensiblement orthogonal au premier (36), permettant à la pédale (35) lorsqu'elle est en appui sur un support, tel que le sol, et est en position armée, de former moyen d'actionnement de la tige (34).

6. Conteneur selon la revendication 5, caractérisé en ce que la pédale (35) peut pivoter d'elle-même par gravité de sa position armée vers sa position désarmée lors du déverrouillage de la trappe.

7. Conteneur selon la revendication 5 ou la revendication 6, caractérisé en ce que la pédale (35) est susceptible de s'escamoter vers l'intérieur de la cuve en s'articulant autour de son second pivot (37).

8. Conteneur selon l'une quelconque des revendications 5 à 7, caractérisé en ce que le porte-pédale (50) est muni d'un moyen tel qu'une plaque (38) formant limiteur de chute, destiné à limiter le pivotement de la pédale autour du second pivot (37) lors de l'ouverture de la trappe (4).

9. Conteneur selon l'une quelconque des revendications 5 à 8, caractérisé en ce que la pédale (35) est reliée à la trappe (4) par l'intermédiaire du porte-pédale (50) sur lequel sont prévus des moyens à verrou (60, 63) du type à bille (61) repoussée par un ressort à tension d'appui réglable et permettant, par appui de la bille, de maintenir la pédale (35), soit en position armée, soit en position désarmée, ladite pédale pouvant toutefois pivoter par gravité de sa position armée vers sa position désarmée, par dégagement de la bille lors de l'ouverture de la trappe (4).

10. Conteneur selon l'une quelconque des revendications précédentes, caractérisé en ce que l'armature de reprise d'efforts est essentiellement concentrée vers le fond de la cuve autour de la plupart des moyens formant le mécanisme (5) de verrouillage/déverrouillage de la trappe (4), ladite armature comprenant:
- au moins un arceau (52) relié à la ceinture métallique (21) qui borde le fond de la cuve
- et un tirant (51) s'étendant entre ledit arceau (52) et l'anneau (27) de levage.

11. Conteneur selon la revendication 10, caractérisé en ce que l'arceau (52) s'étend au-dessus du pêne (6) et de l'anneau d'accrochage (9) de la trappe (4), formant ainsi leur protection supérieure, deux joues (55, 56) tombant de l'arceau (52), de part et d'autre du pêne (6) et de l'anneau d'accrochage (9), formant leur protection latérale.

12. Conteneur selon l'une quelconque des revendications 5 à 11, caractérisé en ce que ladite tige (34) comprend une butée (57) qui vient coopérer avec une partie fixe (58) portée par la cuve pour limiter la course de la tige.

## Claims

1. Glass container comprising a reception vessel (2) on the outside of which a lifting ring (27) is mounted and having a base equipped with an emptying flap (4) which is privided with a bolting and unbolting mechanism (5) this machanism comprising:
- a sliding bolt (6) forming a cam disposed on the inside of the vessel and which is articulated about a pivot (7) supported by the said vessel, the sliding bolt being provided with a hook (8) which cooperates in the bolting position of the flap with a fastening ring (9) connected to this same flap;
- a rigid rod (11, 34), connected to the sliding bolt (6), the said rod being movable in translation and forming a control lever of the sliding bolt and;
- an external operation device (14, 16, 35) for the rod characterized
- in that the sliding bolt (6) is disposed towards the base of the vessel where it cooperates with the fastening ring (9) of the flap which is fixed directly to the latter;
- and in that the vessel (2) is equipped on the inside with a metal reinforcement (20, 23, 51, 52) for the recovery of stresses extending between a reinforcement belt (21) which borders the base of the vessel and the lifting ring (27), this reinforcement being attached to protection means (25, 55, 56) of the bolting and unbolting mechanism of the flap (4).

2. Container according to claim 1, characterized in that the operation device (14, 16) of the rod comprises a curved lever (14) articulated about a support forming a pivot (15) supported by the container, the said lever (14) having at each of its ends an articulation (17, 18) where the rod (11) which extends over the largest internal part of the height of the vessel and a manoeuvring bar (16) comprising two parts (16a, 16b), themselves articulated in relation to one another, respectively articulate.

3. Container according to claim 2, characterized in that the bar (16) is capable in the bolting position of the flap (4) of occupying a retracted position towards the inside of the vessel, and, in the unbolting position of this same flap, of occupying a projecting position towards the outside of this same vessel.

4. Container according to any one of the preceding claims, characterized in that the sliding bolt (6) is provided with an engagement stop (33) against which the fastening ring (9) bears when the flap (4) is closed to control the bolting mechanism (5) and to place the sliding bolt (6) in a locked position.

5. Container according to claim 1, characterized in that the rod (34) penetrates into the base of the vessel through the flap (4) so as to cooperate with a pedal (35) integral with the said flap, this pedal being capable of articulating about the two pivots (36, 37) supported by a pedal holder itself connected to the flap;
the said first pivot (36) extending substantially parallel to the said rod (34) in a locked position of the flap and the pedal articulating between :
- an armed position, in which position the rod (34) is substantially supported by a lower end (34a) on the pedal (35); and
- an unarmed position, in which position the rod (34) is released from this support;
- the said second pivot (37) which has an axis substantially perpendicular to the first (36), enabling the pedal (35) when it is bearing on a support, such as the ground, and is in an armed position, to form an operation device if the rod.

6. container according to claim 5, characterized in that the pedal (35) can pivot by itself by means of gravity from its armed position towards its unarmed position when the flap is unbolted.

7. Container according to claim 5 or 6, characterized in that the pedal (35) is capable of retracing towards the inside of the vessel by articulating about its second pivot (37).

8. Container according to any one of claims 5 to 7, characterized in that the pedal holder (50) is provided with a device such as a plate (38) forming a drop limiter for limiting the rotation of the pedal about the second pivot (37) when the flap (4) is opened.

9. Container according to any one of claims 5 to 8, characterized in that the pedal (35) is connected to the flap (4) by means of the pedal holder (50) on which there are provided bolt devices (60, 63) of the ball type (61) repelled by an adjustable support tension spring and enabling, by means of the ball support, the pedal (35) to be maintained either in an armed position or in an unarmed position, the said pedal however being able to pivot by means of gravity from its armed position towards its disarmed position by the ball disengaging when the flap (4) is opened.

10. Container according to any one of the preceding claims, characterized in that the reinforcement for the recovery of stresses is essentially located towards the base of the vessel around the majority of devices forming the bolting/unbolting mechanism (5) of the flap (4), the said reinforcement comprising;
- at least one bow (52) connected to the metal belt (21) which borders the base of the vessel;
- and a tie rod (51) extending between the said bow (52) and the lifting ring (27).

11. Container according to claim 10, characterized in that the bow (52) extends above the sliding bolt (6) and the fastening ring (9) of the flap (4), thus forming their upper protection, two flanges (55, 56) falling from the bow (52) on either side of the sliding bolt (6) and of the fastening ring (9), forming their lateral protection.

12. Container according to any one of claims 5 to 11, characterized in that the said rod (34) comprises a stop (57) which cooperates with a fixed part (58) supported by the vessel to limit the travel of the rod.

## Patentansprüche

1. Altglasbehälter mit einer Aufnahmewanne (2), die außen von einem Hebering (27) überragt ist und einen Boden aufweist, der mit einer Klappe (4) für die Entleerung ausgestattet ist, die mit einem Verriegelungs- und Entriegelungsmechanismus (5) versehen ist, der aufweist:

– einen Riegel (6), der eine Nocke bildet, die im Inneren der Wanne angeordnet ist, und der um einen von der Wanne getragenen Drehzapfen (7) schwenkbar ist, wobei der Riegel mit einem Haken (8) ausgestattet ist, der in der Verriegelungsstellung der Klappe mit einem Verhakungsring (9) zusammenwirkt, der mit dieser Klappe verbunden ist,

– eine starre Stange (11; 34), die mit dem Riegel (6) verbunden ist, wobei die Stange translatorisch bewegbar ist und einen Bedienungshebel für den Riegel bildet und

– ein Betätigungsmittel (14, 16; 35) außerhalb der Stange, dadurch gekennzeichnet, daß

– der Riegel (6) zum Boden der Wanne hin angeordnet ist, wo er mit dem Verhakungsring (9) der Klappe zusammenwirkt, welcher auf der Klappe direkt befestigt ist,

– und daß die Wanne (2) innen mit einer metallischen Armierung (20, 23; 51, 52) für wiederholte Beanspruchungen ausgestattet ist, welche sich zwischen einem Versteifungsgürtel (21), welcher den Boden der Wanne einfaßt, und dem Hebering (27) erstreckt, wobei diese Armierung mit Schutzmitteln (25; 55, 56) für den Verriegelungs- und Entriegelungsmechanismus der Klappe (4) verbunden ist.

2. Behälter nach Anspruch 1, dadurch gekennzeichnet, daß das Betätigungsmittel (14, 16) der Stange einen abgewinkelten Hebel (14) aufweist, der um eine Stütze schwenkbar ist, die einen von dem Behälter getragenen Drehzapfen (15) bildet, wobei der Hebel (14) an jedem seiner Enden ein Gelenk (17, 18) aufweist, wo jeweils die Stange (11), die sich auf dem größten inneren Teil der Höhe der Wanne erstreckt, und ein Betätigungsstab (16) schwenken, der zwei Teile (16a, 16b) hat, die beide selbst zueinander schwenkbar sind.

3. Behälter nach Anspruch 2, dadurch gekennzeichnet, daß der Stab (16) in der Verriegelungsstellung der Klappe (4) geeignet ist, eine zum Inneren der Wanne hin zurückgezogene Position einzunehmen und in der Entriegelungsstellung derselben Klappe in der Lage ist, eine Position einzunehmen, die nach außerhalb derselben Wanne hervorsteht.

4. Behälter nach einem der vorhergehenden Ansprüche, dadurch gekennzeichnet, daß er Riegel (6) mit einem Eingriffsanschlag (33) ausgestattet ist, gegen welchen der Verhakungsring (9) während des Schließens der Klappe (4) greift, um den Verriegelungsmechanismus (5) zu steuern und den Riegel (6) in Verriegelungsposition zu bringen.

5. Behälter nach Anspruch 1, dadurch gekennzeichnet, daß die Stange (34) auf den Boden der Wanne durch die Klappe (4) mündet, um mit einem einstückig mit der Klappe ausgebildeten Fußhebel (35) zusammenwirken zu können, wobei dieser Fußhebel geeignet ist, um zwei Drehzapfen (36, 37) zu schwenken, die von einem Fußhebelhalter getragen sind, der selbst mit der Klappe verbunden ist,

– wobei sich der erste Drehzapfen (36) im wesentlichen parallel zu der Stange (34) in der Verriegelungsposition der Klappe erstreckt und der Fußhebel schwenkt zwischen:

– einer gespannten Position, in welcher die Stange (34) mit einem unteren Ende (34a) auf den Fußhebel (35) greift und

– einer entsicherten Position, in welcher die Stange (34) außer Eingriff mit dieser Stütze steht,

– wobei der zweite Drehzapfen (37), der eine Achse im wesentlichen senkrecht zum ersten (36) hat, für den Fußhebel (35) die Möglichkeit vorsieht, wenn er sich auf der Halterung abstützt, wie z. B. dem Boden, und wenn er in gespannter Position ist, Betätigungsmittel für die Stange (34) zu bilden.

6. Behälter nach Anspruch 5, dadurch gekennzeichnet, daß der Fußhebel (35) selbst durch Schwerkraft aus seiner gespannten Position in die entsicherte Position während der Entriegelung der Klappe schwenken kann.

7. Behälter nach Anspruch 5 oder Anspruch 6, dadurch gekennzeichnet, daß der Fußhebel (35) geeignet ist, sich zum Inneren der Wanne dadurch einzuziehen, daß er um seinen zweiten Drehzapfen (37) schwenkt.

8. Behälter nach einem der Ansprüche 5 bis 7, dadurch gekennzeichnet, daß der Fußhebelhalter (50) mit einem Mittel ausgestattet ist, wie z. B. einer Platte (38), welche eine Begrenzung für das Fallen bildet, das zur Begrenzung der Schwenkung des Fußhebels um den zweiten Drehzapfen (37) während des Öffnens der Klappe (4) bestimmt ist.

9. Behälter nach einem der Ansprüche 5 bis 8, dadurch gekennzeichnet, daß der Fußhebel (35) mit der Klappe (4) mittels des Fußhebelhalters (50) verbunden ist, auf welchem Mittel mit Bolzen (60, 63) vom Typ mit kleiner Kugel (61) vorgesehen sind, welche durch eine Spannfeder mit regelbarer Abstützung zurückgestoßen wird, die unter Abstützen der kleinen Kugel die Möglichkeit vorsieht, den Fußhebel (35) entweder in gespannter Position oder in entsicherter Position zu halten, wobei der Fußhebel jedoch durch Schwerkraft aus seiner gespannten Position in seine entsicherte Position durch Loskommen von der Kugel während des Öffnens der Klappe (4) schwenken kann.

10. Behälter nach einem der vorhergehenden Ansprüche, dadurch gekennzeichnet, daß die Armierung für wiederholte Beanspruchungen im wesentlichen zum Boden der Wanne hin um den Hauptteil der Mittel herum konzentriert ist, welche den Verriegelungs-/Entriegelungsmechanismus (5) der Klappe (4) bilden, wobei die Armierung aufweist:

– mindestens einen kleinen Bogen (52), der mit dem metallischen Gürtel (21) verbunden ist, welcher den Boden der Wanne einfaßt und

– eine Spannstange (51), die sich zwischen dem kleinen Bogen (52) und dem Hebering (27) erstreckt.

11. Behälter nach Anspruch 10, dadurch gekennzeichnet, daß der kleine Bogen (52) sich über den Riegel (6) und den Verhakungsring (9) der Klappe (4) erstreckt, wobei er so ihren oberen Schutz bildet und wobei zwei Seitenwangen (55, 56) von dem kleinen Bogen (52) auf beiden Seiten des Riegels (6) und des Verhakungsringes (9) hängen und ihren Seitenschutz bilden.

12. Behälter nach einem der Ansprüche 5 bis 11, dadurch gekennzeichnet, daß die Stange (34) einen Anschlag (57) aufweist, der mit einem festen Teil (58), welches von der Wanne getragen wird, um den Lauf des Stabes zu beschränken, zusammenwirkt.

FIG_1

FIG_2

24

16b    16    28e

19    16a

11

28d

30

6

21

28c    33    31

29    8    9    32

4    4

FIG_3

FIG.4

FIG. 5

FIG.6

FIG.7

FIG.8

EP 0 233 090 B1

FIG. 9

FIG. 10

FIG_11

FIG. 12

FIG. 13